# EUROPÄISCHE PATENTSCHRIFT

(11) **EP 2 424 797 B1**
(45) Veröffentlichungstag und Bekanntmachung des Hinweises auf die Patenterteilung: **28.08.2013**
(21) Anmeldenummer: 10736603.1
(22) Anmeldetag: 25.03.2010
(51) Int. Cl.: B65G 21/20, B65H 29/32

(54) **VORRICHTUNG ZUM TRANSPORTIEREN VON TAFELFÖRMIGEN GÜTERN**
DEVICE FOR TRANSPORTING PLATE-SHAPED ARTICLES
DISPOSITIF POUR LE TRANSPORT D' ARTICLES EN FORME DE PLAQUES

(30) Priorität: 02.05.2009 DE 102009019785
(43) Veröffentlichungstag der Anmeldung: 07.03.2012
(73) Patentinhaber: KBA-MetalPrint GmbH, 70435 Stuttgart (DE)
(72) Erfinder: MICHEL, Björn, 70193 Stuttgart (DE)
(74) Vertreter: Stiel, Jürgen
(86) Internationale Anmeldenummer: PCT/EP2010/001856
(87) Internationale Veröffentlichungsnummer: WO 2010/127745

(56) Entgegenhaltungen:
- EP-A2- 0 827 918
- EP-A2- 0 827 919
- US-A- 3 661 381
- US-A- 3 845 950

## Beschreibung

Die Erfindung betrifft eine Vorrichtung zum Transportieren von tafelförmigen Gütern, wie Blechtafeln oder dergleichen, mit einem Transportmittel und einer das jeweilige Gut an dem Transportmittel haltenden Halteeinrichtung, die als Unterdruckhalteeinrichtung ausgebildet ist, deren Unterdruck durch das Transportmittel hindurchwirkt.

Eine Vorrichtung der eingangs genannten Art ist aus dem deutschen Gebrauchsmuster DE 20 2008 004 820 U1 bekannt. Diese bekannte Vorrichtung weist eine Unterdruckhalteeinrichtung auf, bei der der Unterdruck sequenziell derart gesteuert wird, dass dieser lediglich im Bereich, in welchem sich das Gut befindet, anliegt. Um dies realisieren zu können, ist wenigstens ein Sensor zur Erfassung der Tafelvorderkante vor dem Unterdruckbereich vorgesehen, der ein Signal zum sequenziellen Unterdruckaufbau erzeugt. Der Aufbau des Unterdrucks erfolgt mit einer Luftsteuerwalze, die Nuten aufweist, die in Förderrichtung hin abnehmen. Dies bedeutet, dass eine erste Nut mit ihrer größten Länge über einen Zeitbereich Unterdruck erzeugt, der ausreicht, um das Gut bis zu seiner Endposition zu transportieren, während eine letzte Nut kurz gestaltet ist und erst dann wirksam wird, wenn die Nutvorderkante nahezu die Endposition erreicht hat. Diese Lösung hat den Nachteil, dass eine Vielzahl beweglicher Teile erforderlich ist und dass die Luftsteuerwalze synchron zum Gutvorderkanteneinlauf gesteuert werden muss. Die bekannte Vorrichtung ist daher relativ teuer und fehleranfällig im Betrieb.

Die DE 33 43 811 A1 offenbart einen Saugriemenförderer, wobei in einer Platte Längsnuten angeordnet sind, über die ein mit Öffnungen versehener Riemen laufen kann.

Der Erfindung liegt daher die Aufgabe zugrunde, eine Vorrichtung zum Transportieren von tafelförmigen Gütern der eingangs genannten Art zu schaffen, die konstruktiv einfach und im Betrieb fehlerunanfällig ist.

Diese Aufgabe wird erfindungsgemäß dadurch gelöst, dass die Unterdruckhalteeinrichtung mindestens einen sich in Transportrichtung oder im Wesentlichen in Transportrichtung erstreckenden, zum Transportmittel hin zumindest über einen Abschnitts einer Längserstreckung offenen Ansaugkanal aufweist, der im Bereich seines - in Transportrichtung gesehen - guteinlaufseitigen Endes an mindestens eine Unterdruckquelle angeschlossen ist, wobei am Transportmittel im vom Gut nicht abgedeckten Bereich des gutstellungsabhängig offenen Ansaugkanals ein Luftdurchtrittsquerschnitt vorliegt, und wobei ein sich quer, insbesondere rechtwinklig, zur Transportrichtung erstreckender, gegebenenfalls gutstellungsabhängiger Ansaugkanalquerschnitt an der Gutvorderkante eines an der Halteeinrichtung gehaltenen und transportierten Guts zumindest über eine Teillänge des Ansaugkanals maximal gleich groß wie oder kleiner als der jeweils zugehörige Luftdurchtrittsquerschnitt ist. Diese Ausgestaltung führt dazu, dass ein quasi selbststeuernder Unterdruckkanal durch fortschreitendes Abdecken des Ansaugkanals durch das transportierte Gut realisiert ist. Der zum Gut hin offene Ansaugkanal weist guteinlaufseitig den Anschluss an die Unterdruckquelle auf. Wird nun ein tafelförmiges Gut von der Transporteinrichtung gefördert, so überdeckt es fortschreitend den sich in Transportrichtung oder im Wesentlichen in Transportrichtung erstreckenden, zum Gut hin offenen Ansaugkanal und lässt damit ein Unterdruckmaximum des Unterdruckfelds mit der Gutvorderkante mitwandern. Das Maximum ergibt sich an der an der Gutvorderkante vorliegenden Engstelle, an der aufgrund des geringen Querschnitts ein entsprechend großer Druckabfall auftritt. Beim Gegenstand der Erfindung ist daher vorgesehen, dass sich die Engstelle im Bereich der Gutvorderkante befindet, wobei sie sich mit der Bewegung des Guts mitbewegt. Es ist zu berücksichtigen, dass der Luftdurchtrittsquerschnitt am Transportmittel, also der jeweils - in Abhängigkeit von der Stellung des Guts - im nicht abgedeckten Bereich des offenen Ansaugkanals momentan vorliegende Luftdurchtrittsquerschnitt eine veränderliche Größe ist. Je weiter die Vorderkante des Guts in Richtung auf das auslaufseitige Ende des Ansaugkanals gelangt, umso kleiner wird der Luftdurchtrittsquerschnitt. Ferner ist zu berücksichtigen, dass der an der Gutvorderkante vorliegende, sich quer, insbesondere rechtwinklig, zur Transportrichtung erstreckende Querschnitt des Ansaugkanals in seiner Größe abhängig sein kann von der jeweils betrachteten Stellung der Gutvorderkante, sofern der Ansaugkanal - über seine Länge betrachtet - nicht überall einen gleichgroßen Querschnitt aufweist. Erfindungsgemäß ist nun vorgesehen, dass zumindest über eine Teillänge des Ansaugkanals die erfindungsgemäßen Verhältnisse vorliegen, nämlich dass dort - im jeweils gutstellungsabhängig betrachteten Augenblick - der Ansaugkanalquerschnitt im Bereich der Gutvorderkante maximal gleich groß wie oder kleiner als der jeweils dazugehörige Luftdurchtrittsquerschnitt am Transportmittel ist. Ist der Luftdurchtrittsquerschnitt größer als der Ansaugkanalquerschnitt, so liegt die entscheidende, also kleinste, Engstelle im Ansaugkanal im Bereich der Vorderkante, mit der Folge, dass sich dort der größte Druckabfall ausbildet und insofern das Gut dadurch sicher gehalten wird, insbesondere ohne eine hohe Saugleistung der Unterdruckhalteeinrichtung zu benötigen, das heißt, der Energieeinsatz zum Betreiben der Unterdruckhalteeinrichtung kann relativ gering ausfallen und trotzdem wird eine hohe Haltewirkung erzielt. Auch wenn der Luftdurchtrittsquerschnitt ebenso groß wie der Ansaugkanalquerschnitt ist, ergeben sich noch die gewünschten positiven Wirkungen. Die Haltewirkung wandert mit der Gutvorderkante mit. Dieses "Mitwandern" des aktiven Ansaugquerschnitts wird ohne den Einsatz beweglicher Steuerelemente, wie die erwähnte Luftsteuerwalze des Standes der Technik, oder dergleichen geschaffen. Es ist vorteilhaft, wenn der Ansaugkanal einen relativ kleinen Querschnitt aufweist. Es können mehrere Ansaugkanäle vorgesehen sein. Die Anzahl der Ansaugkanäle ist in Abhängigkeit von dem Gewicht und den Abmessungen des tafelförmigen Guts wählbar. Mehrere derartige Ansaugkanäle verlaufen vorzugsweise beabstandet zueinander parallel. Der relativ kleine Querschnitt des Ansaugkanals beziehungsweise die relativ kleinen Querschnitte der Ansaugkanäle erfordern unter Berücksichtigung der erfindungsgemäßen Verhältnisse - wie erwähnt - nur eine klein dimensionierte Unterdruckquelle. Wird als Unterdruckquelle ein Ventilator eingesetzt, so kann er eine relativ kleine Bauform haben und hat daher nur einen geringen Energieverbrauch und erfordert keine oder nur geringe Schallschutzmaßnahmen, da er ein entsprechend leises Betriebsgeräusch aufweist.

Nach einer Weiterbildung der Erfindung ist vorgesehen, dass der Ansaugkanal dadurch offen ist, dass er über seine Längserstreckung rinnenförmig ausgebildet und/oder über seine Längserstreckung mit Öffnungen versehen ist.

Vorteilhaft ist ferner, wenn sich der Luftdurchtrittsquerschnitt aus dem jeweils momentan vorliegenden gutfreien und deckungsgleichen Durchtrittsquerschnitt des Transportmittels und Durchtrittsquerschnitt des Ansaugkanals ergibt.

Nach einer Weiterbildung der Erfindung ist vorgesehen, dass die Unterdruckhalteeinrichtung als aktivierbare und deaktivierbare Unterdruckhalteeinrichtung zum Halten oder Freigeben der Güter ausgebildet ist. Im aktivierten Zustand wird das jeweilige Gut am Transportmittel gehalten; im deaktivierten Zustand wird das Gut freigegeben, sodass es beispielsweise bei der Ausgestaltung der Vorrichtung als Überkopfvorrichtung beim Freigeben vom Transportmittel durch Gravitationswirkung fällt und beispielsweise an einem Stapelort abgelegt wird.

Es ist vorteilhaft, wenn die Unterdruckquelle über eine Unterdruckverbindung strömungstechnisch mit dem Ansaugkanal verbunden ist. Die Unterdruckverbindung stellt demzufolge eine Ansaugverbindung zum Ansaugkanal dar. In der Unterdruckverbindung kann zum Aktivieren und Deaktivieren der Unterdruckhalteeinrichtung ein Schaltventil, insbesondere ein verlagerbarer Schieber oder eine verlagerbare Klappe, vorgesehen sein. Wird das Schaltventil geschlossen, so ist die Unterdruckquelle nicht mehr mit dem Ansaugkanal verbunden, sodass sich der Unterdruck im Ansaugkanal abbaut und das Gut freigegeben wird. Ein Öffnen des Schaltventils führt demzufolge zum Aufbau des Unterdrucks im Ansaugkanal, wodurch das Gut am Transportmittel gehalten wird.

Das Transportmittel weist mindestens einen Transportriemen auf. Vorzugsweise sind mindestens zwei parallel und mit Abstand zueinander verlaufende Transportriemen vorgesehen, an denen das jeweilige Gut, insbesondere die jeweilige Blechtafel, gehalten wird. Jeder der Transportriemen ist mit einem Ansaugkanal ausgestattet. Der mindestens eine, insbesondere die genannten beiden Transportriemen (oder noch weiteren parallel liegenden Transportriemen) gehören vorzugsweise einem Riementrum an, d.h., der Transportriemen beziehungsweise die Transportriemen laufen endlos um. Demgegenüber ist die Unterdruckhalteeinrichtung ortsfest installiert. Die Unterdruckhalteeinrichtung befindet sich auf einer Seite des Transportriemens/der Transportriemen und das zu haltende Gut befindet sich auf der anderen Seite des Transportriemens/der Transportriemen, wobei das Unterdruckfeld durch den Transportriemen/die Transportriemen hindurchwirkt. Demzufolge besteht das Transportmittel vorzugsweise aus luftdurchlässigem Material und/oder weist Unterdrucköffnungen auf.

Wie bereits erwähnt, kann die Vorrichtung vorzugsweise als Überkopf-Vorrichtung zum Transport von tafelförmigen Gütern ausgebildet sein. Diese kann insbesondere einen Stapelbereich für von der deaktivieren Unterdruckhalteeinrichtung abgeworfene Güter aufweisen.

Wie bereits erläutert, kann die Unterdruckquelle vorzugsweise als mindestens ein Ventilator ausgebildet sein.

Nach einer Weiterbildung der Erfindung ist vorgesehen, dass der Kanalquerschnitt und damit der Ansaugkanalquerschnitt - über die Längserstreckung des Ansaugkanals betrachtet - gleich groß ist oder unterschiedlich groß ist, insbesondere in Richtung auf das gutauslaufseitige Ende des Ansaugkanals abnimmt.

Die Zeichnungen veranschaulichen die Erfindung anhand eines Ausführungsbeispiels und zwar zeigt:
- Figur 1: eine schematische Ansicht einer Vorrichtung zum Transportieren von tafelförmigen Gütern,
- Figur 2: eine Längsschnittansicht durch eine Unterdruckhalteeinrichtung der Vorrichtung der Figur 1,
- Figur 3: einen Querschnitt durch die Unterdruckhalteeinrichtung der Figur 2 entlang der Linie III-III und
- Figur 4: ein der Figur 2 entsprechender Längsschnitt, jedoch mit einlaufendem, an einem Transportmittel gehaltenen tafelförmigen Gut.

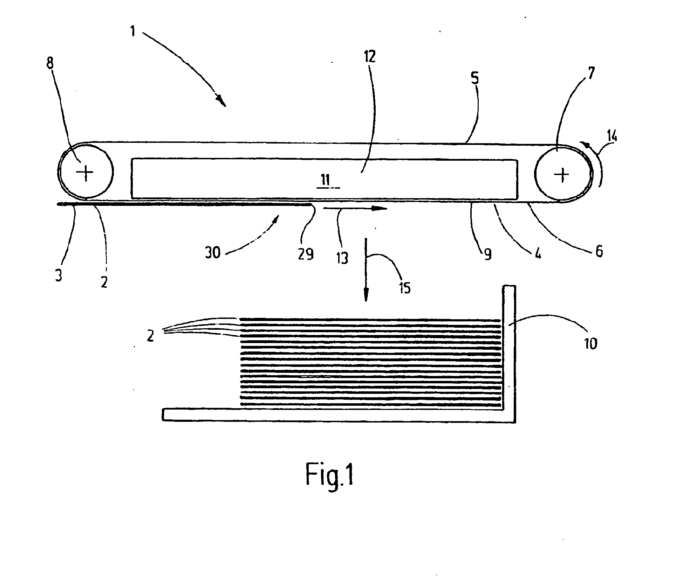

Die Figur 1 zeigt eine Vorrichtung 1 zum Transportieren von tafelförmigen Gütern 2, insbesondere Blechtafeln 3. Mit der Vorrichtung 1 lassen sich die Güter 2 transportieren und insbesondere als Stapel ablegen.

Die Vorrichtung 1 weist ein Transportmittel 4 in Form eines umlaufenden Trums 5 auf, das vorzugsweise als Riementrum ausgebildet ist. Das Trum 5 weist mehrere, seitliche beabstandet zueinander angeordnete Transportriemen 6 auf, wobei nachstehend nur auf einen Transportriemen 6 eingegangen wird. Die übrigen Transportriemen 6 sind gleichartig ausgestaltet und wirken mit gleichartigen, nachstehend noch näher beschriebenen Baugruppen zusammen, sodass es ausreicht, nur einen Transportriemen 6 mit den zugehörigen Baugruppen zu beschreiben.

Der Transportriemen 6 wird über zwei Umlenkräder 7,8 geführt, von denen mindestens eines mittels eines nichtdargestellten Antriebs antreibbar ist. Das Untertrum 9 des Trums 5 ist außenseitig einer Stapelablage 10 für die Güter 2 zugewandt. Der Innenseite des von einem Abschnitt des Transportriemens 6 gebildeten Untertrums 9 ist eine Halteeinrichtung 11 zugeordnet. Die Halteeinrichtung 11 ist als Unterdruckhalteeinrichtung 12 ausgebildet und ortsfest angeordnet. Ist die Unterdruckhalteeinrichtung 12 aktiviert, so wird ein dem Trum 5 zugeführtes Gut 2 am Transportriemen 6, also am Untertrum 9, überkopf gehalten und entsprechend Pfeil 13 transportiert. Die Umlaufrichtung des Trums 5 ist mit einem Pfeil 14 verdeutlicht. Gelangt das Gut 2 in den Bereich der Stapelablage 10, so wird die Umlaufgeschwindigkeit des Trums 5 reduziert, vorzugsweise bis zum Stillstand, und anschließend die Unterdruckhalteeinrichtung 12 deaktiviert, wodurch das Gut 2 freigegeben und gemäß Pfeil 15 auf der Stapelablage 10 durch Herabfallen abgelegt wird.

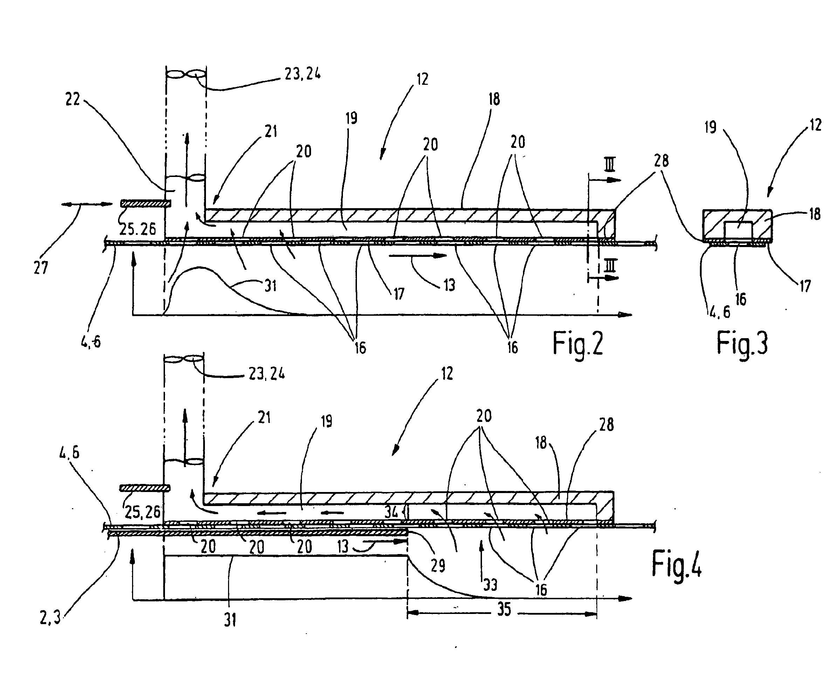

Die Figuren 2 bis 4 verdeutlichen die Unterdruckhalteeinrichtung 12. Die Figuren 2 bis 4 zeigen einen Abschnitt des Transportriemens 6, der luftdurchlässig ausgebildet ist und/oder - über seine Länge gesehen - mit Unterdrucköffnungen 16 versehen ist. Da - wie insbesondere der Figur 1 zu entnehmen ist - die Vorrichtung 1 als Überkopf-Vorrichtung ausgebildet ist, befindet sich die Unterdruckhalteeinrichtung 12 oberhalb des Transportriemens 6 des Untertrums 9, d.h., dieser läuft entlang der Unterseite 17 der Unterdruckhalteeinrichtung 12, wobei vorzugsweise die Materialien des Transportriemens 6 und der Unterseite 17 derart gewählt sind, dass bei einem Aneinandergleiten nur sehr kleine Reibungskräfte auftreten.

Die Unterdruckhalteeinrichtung 12 weist einen leistenförmigen Grundkörper 18 auf, der sich entlang der Längserstreckung des Transportriemens 6 erstreckt. Der Grundkörper 18 ist mit einem Ansaugkanal 19 versehen, der sich in Transportrichtung (Pfeil 13) erstreckt und zum Transportmittel 4, also zum Transportriemen 6, hin über seine gesamte Längserstreckung offen ist, also eine entsprechend lange Schlitzöffnung aufweist oder - wie im Ausführungsbeispiel der Figuren 2 bis 4 dargestellt - mit einer Vielzahl von beabstandet zueinander liegenden, über die Längserstreckung des Ansaugkanals 19 verteilt angeordneten Öffnungen 20 versehen ist. Gemäß Figur 3 weist der Ansaugkanal 19 nur einen sehr kleinen, vorzugsweise quadratischen oder rechteckigen Querschnitt auf. Dieser Querschnitt kann über die Längserstreckung des Ansaugkanals 19 konstant sein oder auch in der Größe variieren.

Im Bereich seines - in Transportrichtung (Pfeil 13) gesehenen - guteinlaufseitigen Endes 21 ist der Ansaugkanal 19 über eine Unterdruckverbindung 22 an eine Unterdruckquelle 23 angeschlossen, die insbesondere als Ventilator 24 ausgebildet sein kann. In der Unterdruckverbindung 22 befindet sich ein Schaltventil 25, das als Schieber 26 ausgebildet ist, der mittels eines nicht dargestellten Aktors in Richtung des Doppelpfeils 27 verlagert werden kann. Eine Verlagerung führt zum Verschließen der Unterdruckverbindung 22 beziehungsweise zu deren Öffnen. Die Öffnungen 20 sind in einer streifenförmigen Gleitplatte 28 ausgebildet, die die Unterseite 17 aufweist, an der der Transportriemen 6 entlangläuft.

Wird ein tafelförmiges Gut 2 der in Betrieb befindlichen Vorrichtung 1 gemäß Figur 1 von einer vorgelagerten, nicht dargestellten Einrichtung zugeführt, so gelangt der eine Gutvorderkante 29 aufweisende vordere Bereich 30 des Guts 2 in den Wirkungsbereich der Unterdruckhalteeinrichtung 12. Es wird davon ausgegangen, dass zunächst, also wenn die Gutvorderkante 29 die Unterdruckhalteeinrichtung 12 noch nicht erreicht hat, die Verhältnisse gemäß Figur 2 vorliegen. Dort ist erkennbar, dass - bei in Offenstellung verlagertem Schaltventil 25 - die Unterdruckquelle 23 einen Unterdruck im Ansaugkanal 19 herstellt, der einen in einem unterhalb der Unterdruckhalteeinrichtung 12 der Figur 2 dargestellten Diagramm gezeigten Verlauf aufweist. In den Figuren 2 bis 4 wird bei den eingetragenen, durch den Unterdruck bewirkten Strömungspfeilen nicht berücksichtigt, dass sich die Unterdrucköffnungen 16 an den Öffnungen 20 vorbeibewegen, sodass nicht ständig eine Offenstellung vorliegt, sondern auch Überdeckungssituationen, die jedoch im zeitlichen Mittel nicht von Bedeutung sind. Um möglichst Überdeckungssituationen zu minimieren, können Langlöcher vorgesehen sein, zwischen denen nur schmale Trennstege ausgebildet sind. Die Pfeillängen der die Öffnungen 16 und 20 durchsetzenden, das Ansaugen verdeutlichten Pfeile verdeutlichen, dass im Bereich des guteinlaufseitigen Endes 21 des Ansaugkanals 19 das sich ausbildende Unterdruckfeld die größte Druckdifferenz aufweist. Über die Längserstreckung des Ansaugkanals 19 gesehen, steigt der Unterdruck im Bereich der Unterdruckverbindung 22 stark an, erreicht dann sein Maximum etwa auf Höhe der Unterdruckverbindung 22 und fällt dann - gutstromabwärts der Unterdruckverbindung 22 - wieder zügig ab. Wird nun-wie vorstehend bereits angedeutet - ein Gut 2 zugeführt, so gelangt dessen vorderer Bereich 30 in den Wirkungsbereich des Unterdrucks der Unterdruckhalteeinrichtung 12, so wie dies aus der Momentsituation der Figur 4 hervorgeht. Dort ist ersichtlich, dass die Gutvorderkante 29 des durch Unterdruck am Transportriemen 6 gehaltenen Guts 2 bereits bis etwa in den mittleren Bereich der Längserstreckung des Ansaugkanals 19 (gemäß Pfeil 13) verlagert wurde. Dabei werden durch das luftundurchlässige Gut 2 die bereits passierten Öffnungen 20 abgedeckt, mit der Folge, dass sich gemäß dem Diagramm der Figur 4 ein entsprechendes Unterdruckfeld aufbaut, das gegenüber dem Unterdruckverlauf der Figur 2 unterschiedlich ist. Entlang der abgedeckten Längserstreckung des Ansaugkanals 19 liegt ein hoher Level des Unterdrucks vor, da die größte Amplitude des maximalen Unterdrucks quasi mit der Gutvorderkante 29 mitwandert, d.h., der abgedeckte Bereich des Ansaugkanals 19 wirkt quasi wie die Unterdruckverbindung 22. Im Bereich vor der Gutvorderkante 29 des Guts 2 ist ein starkes Ansaugen durch die dort vorliegende Engstelle sichergestellt, sodass der mittels des Transportriemens 6 bewegte, vordere Bereich 30 sicher angesaugt und das gesamte Gut 2 fest am Transportmittel 4 in Überkopfposition gehalten ist. Der für die Wegstrecke jeweils vorliegende Verlauf des Unterdrucks ist in den Diagrammen der Figuren 2 und 4 mit dem Bezugszeichen 31 gekennzeichnet. Die Anordnung ist erfindungsgemäß derart getroffen, dass sich an der Gutvorderkante 29 ein quer - insbesondere rechtwinklig - zur Transportrichtung (Pfeil 13) erstreckender Ansaugkanalquerschnitt 34 innerhalb des Ansaugkanals 19 ausbildet, der in der Figur 4 mit gepunkteter Linie angedeutet ist. Dieser Ansaugkanalquerschnitt 34 ist bei einem Ansaugkanal 19 mit über die Länge überall gleichgroßem Querschnitt eine konstante Größe. Sollte der Ansaugkanal 19 über seine Länge gesehen einen sich verändernden Querschnitt aufweisen, so wird sich auch dementsprechend der mit der Gutvorderkante 29 mitwandernde Ansaugkanalquerschnitt 34 ändern. In einem speziellen, nicht dargestellten Ausführungsbeispiel kann vorgesehen sein, dass sich der Querschnitt des Ansaugkanals 19 im Zuge der in Richtung des Pfeils 13 verlaufenden Längserstreckung des Ansaugkanals 19 verkleinert. Ferner ist zu berücksichtigen, dass sich in einer im Zuge des Transports des Guts 2 in der Größe verändernden Zone 35, die von der Gutvorderkante 29 bis zum gutauslaufseitigen Ende des Ansaugkanals 19 verläuft, ein Luftdurchtrittsquerschnitt 33 vorliegt, der am Transportmittel 4 im vom Gut 2 nicht abgedeckten Bereich sowie im Wirkungsbereich des Ansaugkanals 19 gebildet wird. Der Luftdurchtrittsquerschnitt 33 besteht demzufolge aus der Summe der in der Zone 35 vorliegenden Öffnungen 20 unter Berücksichtigung des Fluchtungsgrads mit den Unterdrucköffnungen 16. Der Luftdurchtrittsquerschnitt 33 ist von der Stellung des Guts 2 abhängig. Ferner ist dieser Wert zusätzlich deshalb keine konstante Größe, da sich die Öffnungen 16 an den Öffnungen 20 vorbeibewegen, jedoch stellt sich insoweit ein zeitlicher Mittelwert ein, der einen entsprechenden Luftdurchtrittsquerschnitt 33 repräsentiert. Erfindungsgemäß ist vorgesehen, dass - entsprechend Figur 4 - der Ansaugkanalquerschnitt 34 maximal gleichgroß wie, vorzugsweise kleiner als der jeweils zugehörige Luftdurchtrittsquerschnitt 33 ist. Diese Beziehung gilt zumindest über eine Teillänge des Ansaugkanals 19, insbesondere über eine sich vom guteinlaufseitigen Ende bis kurz vor das gutauslaufseitige Ende des Ansaugkanals 19 erstreckende Teillänge. Hierdurch ist stets sichergestellt, dass an der Gutvorderkante 29 die kleinste Engstelle der gesamten Unterdruckanordnung vorliegt, mit der Folge, dass dort der größte Druckabfall entsteht und dadurch ermöglicht ist, mit relativ kleiner Saugleistung eine hinreichend große Haltekraft zum sicheren Halten des Guts 2 am Transportmittel 4 zu schaffen.

Gelangt das Gut 2 in den Bereich der Stapelablage 10 (Figur 1), so wird die Umlaufgeschwindigkeit des Trums 5 reduziert, vorzugsweise bis zum Stillstand, und anschließend die Unterdruckhalteeinrichtung 12 deaktiviert, indem der Schieber 26 in Schließstellung verlagert wird. Hierdurch wird das Gut 2 freigegeben und gemäß Pfeil 15 auf der Stapelablage 10 durch Herabfallen abgelegt. Anschließend beschleunigt das Trum 5 wieder und übernimmt ein Folgegut und so weiter.

Die Erfindung betrifft demgemäß mindestens einen Ansaugkanal 19 (Vakuumkanal), der quasi ein "Mitwandern" des aktiven Ansaugquerschnitts für das Gut 2 ermöglicht, ohne dass bewegliche Steuerelemente, wie Drehschieber oder Ventile oder dergleichen, eingesetzt werden müssen. Der insbesondere nach unten offene Ansaugkanal (unabhängig davon, ob er mit einer einzigen Schlitzöffnung versehen ist oder mehrere, über die Längserstreckung verteilt angeordnete Öffnung aufweist) hat vorzugsweise einen relativ kleinen Querschnitt und wird - wie erläutert - im Bereich des Guteinlaufs evakuiert. Bei freiem Ansaugquerschnitt des Ansaugkanals 19, wenn sich also dort kein Gut 2 befindet, wird die Luft überwiegend im Bereich des Guteinlaufs angesaugt. Wird der Ansaugkanal 19 zusehends durch das transportierte Gut 2 abgedeckt, so wandert das Unterdruckfeld synchron zum tafelförmigen Gut mit. Es liegt daher ein selbststeuernder Ansaugkanal (Vakuumkanal) vor, bei dem das Gut beispielsweise mittels eines gelochten oder mehrerer gelochter Transportriemen gehalten und beispielsweise abgebremst wird. Es kann ein Ein- und Ausschalten des Unterdrucks (Vakuums) erfolgen, beispielsweise mittels eines pneumatisch betätigbaren Schiebers oder einer Klappe, wobei sich diese Elemente in der Unterdruckverbindung befinden.

Aufgrund der Erfindung kommt es gegenüber dem Stand der Technik zu Kosteneinsparungen, da keine aufwendig herzustellende Luftsteuerwalze erforderlich ist. Der Ansaugkanal lässt sich über einen Schlauch als Unterdruckverbindung 22 mit dem Ventilator verbinden. Der Schlauch kann beispielsweise einen Durchmesser von 50 mm aufweisen. Aufgrund des relativ kleinen Ventilators sind keine besonderen oder sogar gar keine Schallschutzmaßnahmen erforderlich. Insgesamt liegt im Betrieb der Vorrichtung nur ein geringer Energieverbrauch vor.

Selbstverständlich ist es möglich, zusätzlich eine Magnethalteeinrichtung vorzusehen, sodass die Halteeinrichtung also eine Unterdruckhalteeinrichtung und eine Magnethalteeinrichtung umfasst. Aufgrund der Magnetwirkung der Magnethalteeinrichtung, die ein- und ausschaltbar ist, lassen sich ferromagnetische Güter zusätzlich halten. Derartige, rein auf Magnetwirkung basierende Halteeinrichtung können ferner mit der erfindungsgemäßen Ausgestaltung aufgerüstet werden, sodass mit einer derartig aufgerüsteten Vorrichtung nicht nur ferromagnetische tafelförmige Güter, sondern auch nicht ferromagnetische Güter transportiert und gegebenenfalls abgeworfen werden können. Dies ist beispielsweise dann von Bedeutung, wenn als Güter sowohl zum Beispiel Stahlblechtafeln als auch Aluminiumblechtafeln gehandhabt werden. Eine derartige Aufrüstung ist ohne große Umbaumaßnahmen möglich.

## Patentansprüche

1. Vorrichtung zum Transportieren von tafelförmigen Gütern, wie Blechtafeln, mit einem Transportmittel und einer das jeweilige Gut an dem Transportmittel haltenden Halteeinrichtung, die als Unterdruckhalteeinrichtung ausgebildet ist, deren Unterdruck durch das Transportmittel hindurchwirkt, wobei die Unterdruckhalteeinrichtung (12) mindestens einen sich in Transportrichtung erstreckenden, zum Transportmittel (4) hin zumindest über einen Abschnitt seiner Längserstreckung offenen Ansaugkanal (19) aufweist, der im Bereich seines in Transportrichtung gesehen guteinlaufseitigen Endes (21) an mindestens eine Unterdruckquelle (23) angeschlossen ist, wobei am Transportmittel (4) im vom Gut (2) nicht abgedeckten Bereich (Zone 35) des gutstellungsabhängig offenen Ansaugkanals (19) ein Luftdurchtrittsquerschnitt (33) vorliegt, und wobei ein sich quer zur Transportrichtung erstreckender, gegebenenfalls gutstellungsabhängiger Ansaugkanalquerschnitt (34) an der Gutvorderkante (29) eines an der Halteeinrichtung (11) gehaltenen und transportierten Guts (2) zumindest über eine Teillänge des Ansaugkanals (19) maximal gleich groß wie oder kleiner als der jeweils zugehörige Luftdurchtrittsquerschnitt (33) ist, dass der Ansaugkanal (19) dadurch offen ist, dass er über seine Längserstreckung mit Öffnungen (20) versehen ist, wobei das Transportmittel (4) mindestens einen Transportriemen (6) aufweist, wobei der Transportriemen (6) über seine Länge gesehen mit Unterdrucköffnungen (16) versehen ist und wobei der Luftdurchtrittsquerschnitt (33) aus der Summe der in der Zone (35) vorliegenden Öffnungen (20) unter Berücksichtigung des Fluchtungsgrads mit den Unterdrucköffnungen (16) besteht.

2. Vorrichtung nach einem der vorhergehenden Ansprüche, **dadurch gekennzeichnet, dass** die Unterdruckhalteeinrichtung (12) als aktivierbare und deaktivierbare Unterdruckhalteeinrichtung (12) zum Halten oder Freigeben der Güter (2) ausgebildet ist.

3. Vorrichtung nach einem der vorhergehenden Ansprüche, **dadurch gekennzeichnet, dass** die Unterdruckquelle (23) über eine Unterdruckverbindung (22) strömungstechnisch mit dem Ansaugkanal (19) verbunden ist.

4. Vorrichtung nach einem der vorhergehenden Ansprüche, **dadurch gekennzeichnet, dass** in der Unterdruckverbindung (22) zum Aktivieren und Deaktivieren der Unterdruckhalteeinrichtung (12) ein Schaltventil (25), insbesondere ein verlagerbarer Schieber (26) oder eine verlagerbare Klappe, angeordnet ist.

5. Vorrichtung nach einem der vorhergehenden Ansprüche, **dadurch gekennzeichnet, dass** der Transportriemen (6) einem Trum (5) angehört.

6. Vorrichtung nach einem der vorhergehenden Ansprüche, **gekennzeichnet durch** die Ausbildung als Überkopf-Vorrichtung.

7. Vorrichtung nach einem der vorhergehenden Ansprüche, **gekennzeichnet durch** einen Stapelbereich für von der deaktivierten Unterdruckhalteeinrichtung (12) abgeworfene Güter (2).

8. Vorrichtung nach einem der vorhergehenden Ansprüche, **dadurch gekennzeichnet, dass** die Unterdruckquelle (23) als mindestens ein Ventilator (24) ausgebildet ist.

9. Vorrichtung nach einem der vorhergehenden Ansprüche, **dadurch gekennzeichnet, dass** der Kanalquerschnitt und damit der Ansaugkanalquerschnitt (34) über die Längserstreckung des Ansaugkanals (19) betrachtet gleich groß ist oder unterschiedlich groß ist.

10. Vorrichtung nach einem der vorhergehenden Ansprüche, **dadurch gekennzeichnet, dass** der Kanalquerschnitt und damit der Ansaugkanalquerschnitt (34) über die Längserstreckung des Ansaugkanals (19) betrachtet in Richtung auf das gutauslaufseitige Ende des Ansaugkanals (19) abnimmt.

11. Vorrichtung nach einem der vorhergehenden Ansprüche, **dadurch gekennzeichnet, dass** sich der Ansaugkanalquerschnitt (34) rechtwinklig zur Transportrichtung erstreckt.

## Claims

1. Apparatus for the transportation of tabular goods, such as sheet metal panels, having a means of transport and a retaining device retaining the respective goods on the means of transport, which device is designed as a vacuum retaining device, the vacuum of which acts through the means of transport, the vacuum retaining device (12) having at least one intake duct (19) extending in the transport direction, open to the means of transport (4) at least over one section of its lengthwise extent, which in the area of its goods entry side end (21), seen in the transport direction, is attached to at least one vacuum source (23), an air inlet cross-section (33) being present on the transport means (4) in the area (zone 35) of the goods (2) position-dependent open intake duct (19) not covered by the goods, and an optionally goods position-dependent intake duct cross-section (34) extending transversely to the transport direction of goods (2) held and transported on the goods front edge (29) on a retaining device (11) at least over a partial length of the intake duct (19) at most being of equal size as or smaller than the in each case respective air inlet cross-section (33), such that the intake duct (19) is open in that it is provided with openings (20) over its longitudinal extension, the transport means (4) having at least one transport belt (6), the transport belt (6) being provided, seen over its length, with vacuum openings (16) and the air inlet cross-section (33) consisting of the sum of the openings (20) present in the zone (35) taking into consideration the degree of variation with the vacuum openings (16).

2. Apparatus according to the preceding claim, **characterised in that** the vacuum holding device (12) is designed as an activatable and deactivatable vacuum holding device (12) for holding or releasing the goods (2).

3. Apparatus according to one of the preceding claims, **characterised in that** the vacuum source (23) is connected fluidically to the intake duct (19) by means of a vacuum connection (22).

4. Apparatus according to one of the preceding claims, **characterised in that** a switching valve (25), in particular a displaceable slide (26) or a displaceable flap, is arranged in the vacuum connection (22) for activating and deactivating the vacuum retaining device (12).

5. Apparatus according to one of the preceding claims, **characterised in that** the transport belt (6) belongs to a centre (5).

6. Apparatus according to one of the preceding claims, **characterised by** design as an overhead apparatus.

7. Apparatus according to one of the preceding claims, **characterised by** a stacking region for goods (2) unmounted by the deactivated vacuum retaining device (12).

8. Apparatus according to one of the preceding claims, **characterised in that** the vacuum source (23) is designed as at least one fan (24).

9. Apparatus according to one of the preceding claims, **characterised in that** the channel cross-section and thus the intake channel cross-section (34) is considered of equal size or different size over the longitudinal extension of the vacuum duct (19).

10. Apparatus according to one of the preceding claims, **characterised in that** the channel cross-section and thus the intake channel cross-section (34) decreases over the longitudinal extension of the intake channel (19) considered in the direction towards the goods outlet side of the intake duct (19).

11. Apparatus according to one of the preceding claims, **characterised in that** the intake duct cross-section (34) extends at right angles to the transport direction.

## Revendications

1. Installation pour le transport de produits en forme de plaques, tels que des feuilles de tôle, avec un moyen de transport et un dispositif de maintien retenant le produit correspondant sur le moyen de transport, et réalisé sous forme de dispositif de maintien par dépression, dont la dépression agit au travers du moyen de transport, ledit dispositif de maintien par dépression (12) comportant au moins un conduit d'aspiration (19) s'étendant dans la direction de transport ou sensiblement dans la direction de transport, ouvert sur au moins sur une partie de son extension longitudinale vers le moyen de transport (4), lequel est raccordé à au moins une source de dépression (23) au niveau de son extrémité (21) côté entrée du produit - vu dans la direction de transport, une section (33) de passage d'air étant ménagée sur le moyen de transport (4) dans la zone non recouverte (zone 35) par le produit (2) du conduit d'aspiration (19) ouvert en fonction de la position du produit, et une section (34) de conduit d'aspiration s'étendant transversalement, en particulier perpendiculairement à la direction de transport, et dépendant éventuellement de la position du produit, étant de grandeur inférieure ou au plus de grandeur égale à la section (33) de passage d'air correspondante, au niveau du bord avant (29) d'un produit (2) retenu sur le dispositif de maintien (11) et transporté au moins sur une longueur partielle du conduit d'aspiration (19), ledit conduit d'aspiration (19) étant ouvert du fait qu'il est réalisé en forme de gouttière sur son extension longitudinale et/ou pourvu d'ouvertures (20) sur son extension longitudinale, le moyen de transport (4) comportant au moins une courroie de transport (6), la courroie de transport (6) - vue sur sa longueur - étant pourvue d'ouvertures de dépression (16), et la section (33) de passage d'air étant formée par le total des ouvertures (20) présentées dans la zone (35) en tenant compte du degré d'alignement avec les ouvertures de dépression (16).

2. Installation selon la revendication précédente, **caractérisée en ce que** le dispositif de maintien par dépression (12) est réalisé sous forme de dispositif de maintien par dépression (12) pouvant être activé ou désactivé pour le maintien ou la libération des produits (2).

3. Installation selon l'une des revendications précédentes, **caractérisée en ce que** la source de dépression (23) est reliée au conduit d'aspiration (19) par une liaison de dépression (22) pour la circulation fluidique.

4. Installation selon l'une des revendications précédentes, **caractérisée en ce qu'**une vanne de commande (25), en particulier une vanne à tiroir (26) mobile ou un clapet mobile, est montée dans la liaison de dépression (22) pour l'activation et la désactivation du dispositif de maintien par dépression (12).

5. Installation selon l'une des revendications précédentes, **caractérisée en ce que** la courroie de transport (6) fait partie d'un brin (5).

6. Installation selon l'une des revendications précédentes, **caractérisée par** une réalisation sous forme d'installation en hauteur.

7. Installation selon l'une des revendications précédentes, **caractérisée par** une zone d'empilement pour des produits (2) rejetés du dispositif de maintien par dépression (12) désactivé.

8. Installation selon l'une des revendications précédentes, **caractérisée en ce que** la source de dépression (23) est réalisée sous la forme d'au moins un ventilateur (24).

9. Installation selon l'une des revendications précédentes, **caractérisée en ce que** la section du conduit et donc la section (34) du conduit d'aspiration sont de grandeur égale ou différenciée - vues sur l'extension longitudinale du conduit d'aspiration (19).

10. Installation selon l'une des revendications précédentes, **caractérisée en ce que** la section du conduit et donc la section (34) du conduit d'aspiration diminuent vers l'extrémité côté sortie du produit du conduit d'aspiration (19) - vues sur l'extension longitudinale du conduit d'aspiration (19).

11. Installation selon l'une des revendications précédentes, **caractérisée en ce que** la section (34) du conduit d'aspiration s'étend perpendiculairement à la direction de transport.
